# EUROPÄISCHE PATENTANMELDUNG

(11) **EP 2 602 649 A1**
(43) Veröffentlichungstag der Anmeldung: **12.06.2013**
(21) Anmeldenummer: 11191958.5
(22) Anmeldetag: 05.12.2011
(51) Int. Cl.: G02B 21/08

(54) **Ringlichtkonzentrator**

(71) Anmelder: Alicona Imaging GmbH, 8074 Grambach bei Graz (AT)
(72) Erfinder: Prantl, Manfred, 8044 Graz (AT); Scherer, Stefan, 8010 Graz (AT); Helmli, Franz, 8505 St. Nikolai/Sausal (AT); Saghy, Attila, 8042 Graz (AT)
(74) Vertreter: Schwarz & Partner

(57) **Zusammenfassung**

Die Erfindung betrifft ein Beleuchtungssystem zur Beleuchtung der Oberfläche einer Probe (4), das eine um eine abbildende Optik (2) eines Gerätes (1; 6; 9) angeordnete Lichtquelle (3; 7; 10) aufweist, wobei zumindest eine optisch wirksame Komponente (5; 8; 11 bis 16) im Strahlengang zwischen Lichtquelle (3; 7; 10) und der Oberfläche der Probe (4) vorgesehen ist, die zum Fokussieren des von der Lichtquelle (3; 7; 10) abgestrahlten Lichts (L) mittels Totalreflexion an zumindest einer Oberfläche der Komponente (5; 8; 11 bis 16) in einen Beleuchtungsbereich (B) auf der Oberfläche der Probe (4) im Bereich der optischen Achse (A) der abbildenden Optik (2) ausgebildet ist.

## Beschreibung

Die Erfindung betrifft ein Verfahren für die optische Messung an einer Probe mittels Dunkelfeldbeleuchtung, wobei von einer um eine abbildende Optik angeordneten Lichtquelle Licht auf die Oberfläche der Probe abgestrahlt wird.

Die Erfindung betrifft weiters ein Beleuchtungssystem zur Beleuchtung der Oberfläche einer Probe, das eine um eine abbildende Optik eines Gerätes angeordnete Lichtquelle aufweist.

Dunkelfeldbeleuchtung ist eine weit verbreitete Methode in der Mikroskopie. Sie erlaubt es, einige feine Details auf einer Oberfläche zu erkennen, die mit anderen Beleuchtungsmethoden nicht zugänglich sind. In optischen 3D-Oberflächenmesssystemen wird dieser Beleuchtungstyp verwendet, um Proben mit steilen Flanken zu messen. Um stark geneigte Oberflächen messen zu können benötigt man eine Beleuchtung mit hoher numerischer Apertur, da sonst zu wenig Licht in die detektierende Optik gelangt. Ein solches 3D-Oberflächenmesssystem ist beispielsweise in der Patentanmeldung (EP 11187848.4) beschrieben.

Die rasante Entwicklung von Bildsensoren bringt immer schnellere Systeme hervor. Um bei den stetig wachsenden Bildwiederholraten ausreichend belichten zu können ist eine entsprechend große Lichtmenge im Sichtfeld des Sensors von Nöten. Darüber hinaus erfordern einige sehr effektive Mikroskopietechniken wie z.B. die Kreuzpolarisation besonders intensive Beleuchtungen, da nur ein Bruchteil des Lichts bis zum Bildsensor gelangt.

Des Weiteren nimmt mit zunehmender Beleuchtungsintensität der störende Einfluss von Umgebungslicht ab.

Dem Fachmann sind Verfahren und Beleuchtungssysteme bekannt, bei denen die Dunkelfeldbeleuchtung häufig durch sogenannte Ringlichter realisiert wird. Dabei handelt es sich in der Regel um runde Lichtquellen, welche die abbildende Optik konzentrisch umschließen.

Früher wurde das Licht meist über Lichtwellenleiter in den Ring eingespeist. In modernen Ringlichtern kommen heute Leuchtdioden zum Einsatz. Davon ist eine Vielzahl um die abbildende Optik herum angeordnet. Meist handelt es sich dabei um sehr einfache Konstruktionen, bei denen die LEDs parallel zur optischen Achse des Systems emittieren. In besseren Ringlichtern sind die LEDs in entsprechenden Winkeln angeordnet so dass die Emissionsachsen sich in einem Punkt schneiden.

Bei diesen bekannten Beleuchtungssystemen trifft auf Grund der breiten Abstrahlcharakteristik der Leuchtdioden nur ein Bruchteil des emittierten Lichts innerhalb des mikroskopischen Sichtfelds bzw. Beleuchtungsbereichs auf die Oberfläche der Probe. Das meiste Licht geht für die Messung jedoch verloren.

Der Erfindung liegt die Aufgabe zugrunde ein Verfahren für die flächenhafte optische dreidimensionale Messung von Oberflächentopographien einer Probe mittels Dunkelfeldbeleuchtung und ein Beleuchtungssystem zur Beleuchtung der Oberfläche einer Probe zu schaffen, bei dem die vorstehenden Nachteile vermieden werden.

Erfindungsgemäß wird diese Aufgabestellung bei so einem Verfahren dadurch gelöst, dass das Licht von der Lichtquelle zumindest eine optisch wirksame Komponente durchstrahlt und mittels Totalreflexion an zumindest einer Oberfläche der Komponente in einen Beleuchtungsbereich auf der Oberfläche der Probe im Bereich der optischen Achse der abbildenden Optik fokussiert wird.

Erfindungsgemäß wird diese Aufgabestellung bei so einem Beleuchtungssystem dadurch gelöst, dass zumindest eine optisch wirksame Komponente im Strahlengang zwischen Lichtquelle und der Oberfläche der Probe vorgesehen ist, die zum Fokussieren des von der Lichtquelle abgestrahlten Lichts mittels Totalreflexion an zumindest einer Oberfläche der Komponente in einen Beleuchtungsbereich auf der Oberfläche der Probe im Bereich der optischen Achse der abbildenden Optik ausgebildet ist.

Es werden somit Komponenten bzw. Konzentratoren verwendet, die auf interner Totalreflexion basieren. Dabei handelt es sich um transparente Glas- oder Kunststoffteile, die das von der Lichtquelle emittierte Licht im Sichtfeld der abbildenden Optik fokussieren. Das Licht aus der rund um die Mikroskopoptik angeordneten Lichtquelle tritt in den Konzentrator ein und verlässt diesen nach einer oder mehreren Totalreflexionen wieder in Richtung der Probe. Die Konzentratoren sind in der Regel rotationssymmetrische Körper. Andere Formen sind jedoch ebenfalls möglich.

Abhängig vom Typ der Lichtquelle die im Beleuchtungssystem verbaut ist können unterschiedliche Komponenten verwendet werden, um das Licht zu fokussieren. Hierauf und auf weitere Vorteile der Erfindung ist anhand der Ausführungsbeispiel der Erfindung näher eingegangen.
Figur 1 zeigt ein Beleuchtungssystem gemäß einem ersten Ausführungsbeispiel der Erfindung mit kollimiertem Licht.
Figur 2 zeigt ein Beleuchtungssystem gemäß einem zweiten Ausführungsbeispiel der Erfindung mit kollimiertem Licht.
Figur 3 zeigt ein Beleuchtungssystem gemäß einem dritten Ausführungsbeispiel der Erfindung mit Licht von einer punktförmigen Lichtquelle.

In den Figuren 4 bis 6 sind weitere mögliche Ausbildungen von optisch wirksamen Komponenten dargestellt.

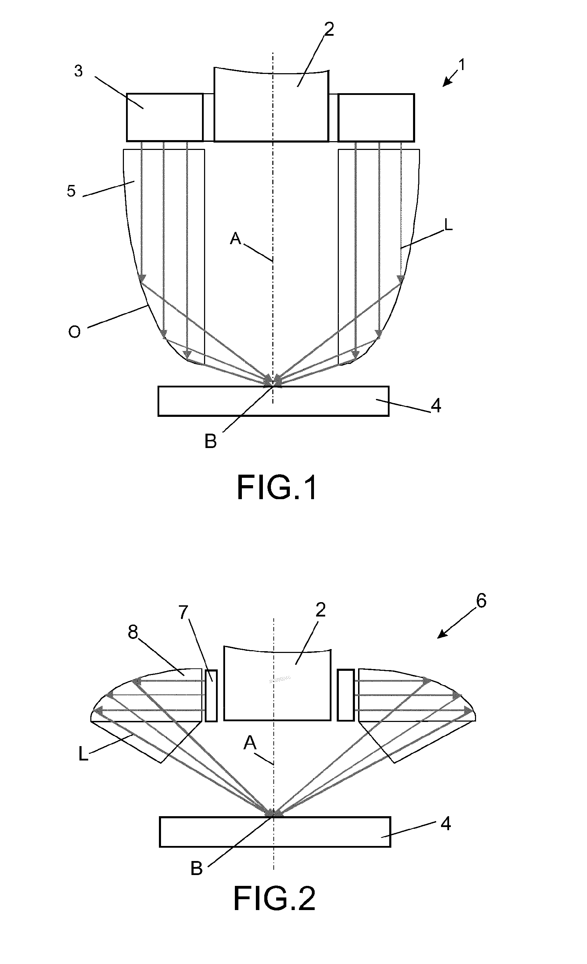

Figur 1 zeigt ein Mikroskop 1 in einer schemenhaften Schnittdarstellung, wobei das Mikroskop 1 eine abbildende Optik 2 mit einer optischen Achse A und eine Lichtquelle 3 aufweist. Mit dem Mikroskop 1 ist eine flächenhafte optische dreidimensionale Messung der Oberflächentopographie einer Probe 4 mittels Dunkelfeldbeleuchtung möglich. Die Lichtquelle 3 ist ringförmig um die abbildende Optik 2 angeordnet und weist eine Mehrzahl an Leuchtdioden (z.B. 5mm Leuchtdioden) als Lichtquelle auf. Die Achsen der Leuchtdioden sind derart parallel ausgerichtet, das von der Lichtquelle 3 ein kollimiertes Licht L abgegeben wird.

Das Mikroskop 1 weist nunmehr eine optisch wirksame Komponente bzw. einen Konzentrator 5 auf, der im Strahlengang zwischen Lichtquelle 3 und Probe 4 vorgesehen ist. Der Konzentrator 5 ist zum Fokussieren des von der Lichtquelle 3 abgestrahlten Lichts L mittels Totalreflexion an einer Oberfläche O des Konzentrators 5 in einen Beleuchtungsbereich B auf der Oberfläche der Probe 4 im Bereich der optischen Achse A der abbildenden Optik 2 ausgebildet. Hierfür ist der Konzentrator 5 aus lichtdurchlässigem Material, nämlich aus Kunststoff gebildet. Durch den unterschiedlichen Brechungsindex des Kunststoffes und der den Konzentrator 5 umgebenden Luft und durch das relativ flache auftreffen der Lichtstrahlen L auf der Oberfläche O werden die Lichtstrahlen L als Totalreflexion in den Konzentrator 5 zurück reflektiert. Die Oberfläche O weist eine derart dimensionierte parabolische Form auf, um sämtliche parallel in den Konzentrator 5 eintretenden Lichtstrahlen L in den sehr kleinen Beleuchtungsbereich B zu fokussieren.

Hierdurch ist der Vorteil erhalten, dass das gesamte von der Lichtquelle 3 in den Kollimator 5 eingestrahlte Licht L in den Beleuchtungsbereich B fokussiert wird, wodurch die Oberfläche der Probe in diesem Beleuchtungsbereich B sehr hell erleuchtet ist. Umgebungslicht stört praktisch nicht und es können qualitativ hochwertige Messungen oder Beobachtungen durchgeführt werden.

Figur 2 zeigt ein optisches Messgerät 6, das ebenfalls eine um die abbildende Optik 2 angeordnete Lichtquelle 7 aufweist. Die Lichtquelle 7 gibt ebenfalls kollimiertes Licht ab, wobei bei der Lichtquelle 7 das Licht L am Umfang der ringförmigen Lichtquelle 7 abgegeben wird. Das von der Lichtquelle 7 abgegebene Licht L tritt in einen ebenfalls ringförmig um die Lichtquelle 7 angeordneten Konzentrator 8 ein. Dieser Konzentrator 8 weist zwar auch eine parabolische, aber sonst recht unterschiedliche Form als die des Konzentrators 5 gemäß dem ersten Ausführungsbeispiel der Erfindung auf, aber auch der Konzentrator 8 fokussiert das von der Lichtquelle 7 einfallende Licht L in den Beleuchtungsbereich B auf der Oberfläche der Probe 4. Je nach der zu messenden Probe 4 und je nach dem gewählten Messverfahren kann diese Form des Konzentrators 8 und die Anordnung der Lichtquelle 7 Vorteile gegenüber der Anordnung gemäß Figur 1 aufweisen. Mit dem Messgerät 6 können durch die abbildende Optik 2 gemessene Messdaten gespeichert und weiter verarbeitet werden.

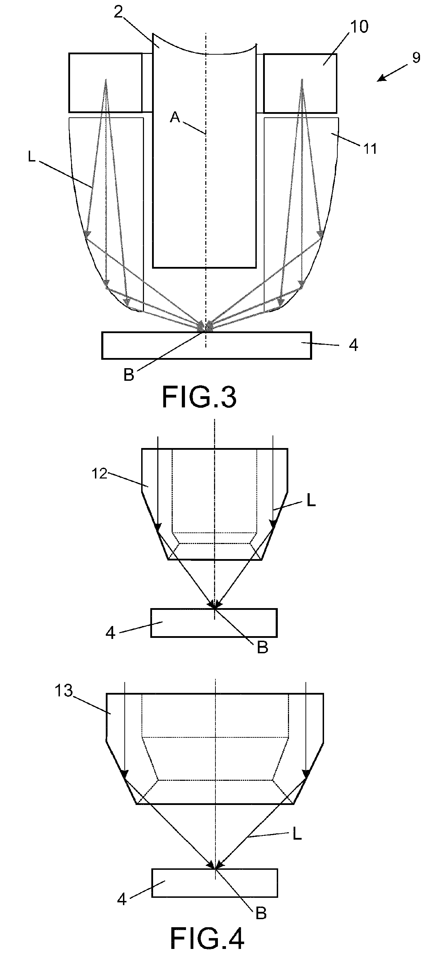

Das in Figur 3 dargestellte Mikroskop 9 weist eine Lichtquelle 10 auf, aus der Licht L punktförmig, beziehungsweise aus der ringförmigen Lichtquelle 10 ringförmig, abgegeben wird. Die Lichtstrahlen L treten daher auch nicht parallel in einen Konzentrator 11 des Mikroskops 9 ein. Die optisch wirksame Oberfläche O des Konzentrators 11 weist eine elliptische Form auf, um sämtliche in den Konzentrator 11 eingestrahlten Lichtstrahlen L in den Beleuchtungsbereich B zu fokusieren. Der Konzentrator 11 ist aus durchsichtigem Glas gebildet.

Bei dem Mikroskop 9 ragt die abbildende Optik 2 in den Konzentrator 11 bis knapp an die Probe 4 heran. Es ist somit ersichtlich, dass das Anordnen des Konzentrators 11 die zum Fokussieren oder Zoomen nötige Bewegungsfreiheit der abbildenden Optik 2 nicht einschränkt.

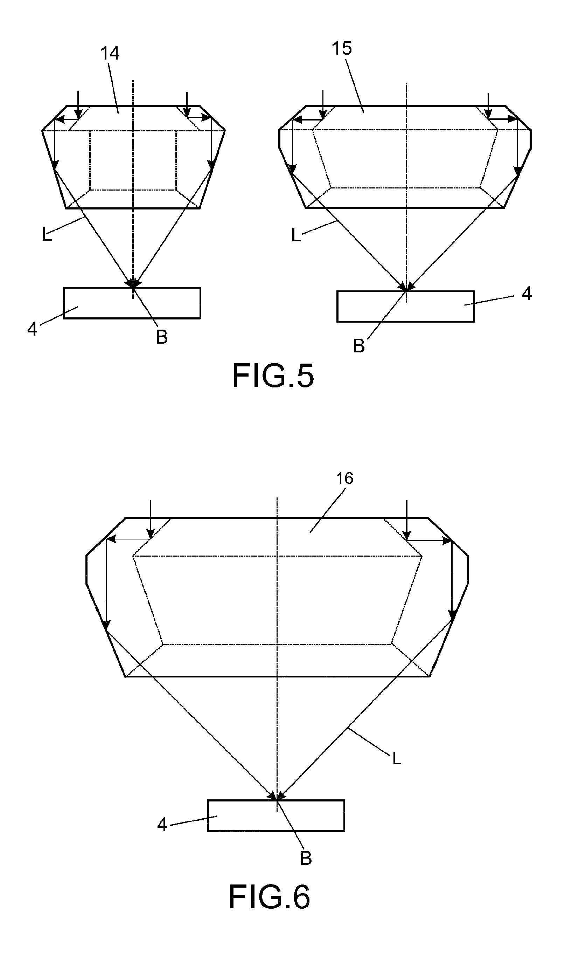

In den Figuren 4 bis 6 sind weitere Beispiele für mögliche Ausbildungen von Konzentratoren 12, 13, 14, 15 und 16 dargestellt, die durch Kombination unterschiedlicher Designs eine höhere numerische Apertur und somit eine intensivere Beleuchtung der Oberfläche der Probe 4 im Beleuchtungsbereich B ermöglichen.

Das Fokussieren des Lichts L ermöglicht sehr intensive Beleuchtungen. Auf Grund der reflektiven Optik können große numerische Aperturen erreicht werden. Die beschichteten oder unbeschichteten Glas- oder Plastikteile ermöglichen eine sehr einfache, kostengünstige Beleuchtungsoptik.

Es kann erwähnt werden, dass auch zwei oder mehrere Komponenten als Konzentrator optisch wirksam angeordnet werden können, um das von der Lichtquelle abgestrahlte Licht mittels Totalreflexionen in den Konzentratoren in den Beleuchtungsbereich zu fokussieren.

Weiters könnten Konzentratoren so geformt sein, um auch nur im Wesentlichen kollimiertes Licht oder schmalwinkelig abgestrahltes Licht oder breitwinkelig abgestrahltes Licht in den Beleuchtungsbereich zu fokussieren. Hierfür können die optisch wirksamen Oberflächen der Konzentratoren folgende Formen aufweisen: parabolisch, elliptisch, sphärisch, asphärisch, toroidal, konisch, zylindrisch. Auch eine sogenannte Freiformfläche wäre möglich, die nicht durch eine der vorstehenden bekannten Formen gebildet ist.

Es kann erwähnt werden, dass die Größe des Beleuchtungsbereichs B je nach Anwendungsfall unterschiedlich sein kann. Der Beleuchtungsbereich B könnte beispielsweise einen Durchmesser von einem oder mehreren Zentimetern oder einem oder mehreren Millimetern oder einem oder mehreren Mikrometern aufweisen oder sogar noch kleiner sein.

Es kann erwähnt werden, dass das beschriebene Beleuchtungssystem auch bei anderen Messungen an Proben angewendet werden kann, bei denen keine flächenhafte optische dreidimensionale Messung der Oberflächentopographie durchgeführt wird. Das durch die optisch wirksamen Komponenten auf den kleinen Beleuchtungsbereich fokussierte helle Licht ist auch bei anderen Messverfahren sehr vorteilhaft verwendbar.

## Patentansprüche

1. Verfahren für die optische Messung an einer Probe (4) mittels Dunkelfeldbeleuchtung, wobei von einer um eine abbildende Optik (2) angeordneten Lichtquelle (3; 7; 10) Licht (L) auf die Oberfläche der Probe (4) abgestrahlt wird, **dadurch gekennzeichnet, dass** das Licht (L) von der Lichtquelle (3; 7; 10) zumindest eine optisch wirksame Komponente (5; 8; 11 bis 16) durchstrahlt und mittels Totalreflexion an zumindest einer Oberfläche (0) der Komponente (5; 8; 11 bis 16) in einen Beleuchtungsbereich (B) auf der Oberfläche der Probe im Bereich der optischen Achse (A) der abbildenden Optik (2) fokussiert wird.

2. Verfahren gemäß Anspruch 1, **dadurch gekennzeichnet, dass** mehrere optisch wirksame Komponenten (5; 8; 11 bis 16) von dem Licht (L) der Lichtquelle (3; 7; 10) durchstrahlt werden und von jeder der Komponenten (5; 8; 11 bis 16) das durch Totalreflexion abgelenkte Licht (L) in den Beleuchtungsbereich (B) auf der Oberfläche der Probe (4) fokussiert wird.

3. Beleuchtungssystem zur Beleuchtung der Oberfläche einer Probe (4), das eine um eine abbildende Optik (2) eines Gerätes (1; 6; 9) angeordnete Lichtquelle (3; 7; 10) aufweist, **dadurch gekennzeichnet, dass** zumindest eine optisch wirksame Komponente (5; 8; 11 bis 16) im Strahlengang zwischen Lichtquelle (3; 7; 10) und der Oberfläche der Probe (4) vorgesehen ist, die zum Fokussieren des von der Lichtquelle (3; 7; 10) abgestrahlten Lichts (L) mittels Totalreflexion an zumindest einer Oberfläche der Komponente (5; 8; 11 bis 16) in einen Beleuchtungsbereich (B) auf der Oberfläche der Probe (4) im Bereich der optischen Achse (A) der abbildenden Optik (2) ausgebildet ist.

4. Beleuchtungssystem gemäß Anspruch 3, **dadurch gekennzeichnet, dass** die Lichtquelle (3; 7; 10) derart aufgebaut ist, dass das von der Lichtquelle (3; 7; 10) abgestrahlte Licht (L) eine der folgenden Abstrahlcharakteristika aufweist: kollimiertes Licht; im Wesentlichen kollimiertes Licht; von einer punktförmigen Lichtquelle abgestrahltes Licht; schmalwinkelig abgestrahltes Licht; breitwinkelig abgestrahltes Licht.

5. Beleuchtungssystem gemäß einem der Ansprüche 3 oder 4, **dadurch gekennzeichnet, dass** die zumindest eine optisch wirksame Komponente (5; 8; 11 bis 16) aus lichtdurchlässigem Material und insbesondere aus Glas oder Kunststoff gebildet ist.

6. Beleuchtungssystem gemäß einem der Ansprüche 3 bis 5, **dadurch gekennzeichnet, dass** die Oberfläche der Komponente (5; 8; 11 bis 16), an der das Licht (L) von der Lichtquelle (3; 7; 10) durch interne Totalreflexion abgelenkt wird eine der folgenden Formen aufweist:
parabolisch, elliptisch, sphärisch, asphärisch, toroidal, konisch, zylindrisch; Freiformfläche.

7. Beleuchtungssystem gemäß einem der Ansprüche 3 bis 6, **dadurch gekennzeichnet, dass** im Strahlengang zwischen Lichtquelle (3; 7; 10) und der Oberfläche der Probe (4) zumindest zwei Oberflächen der Komponente (5; 8; 11 bis 16) vorgesehen sind, an der das Licht (L) durch eine interne Totalreflexion abgelenkt wird.

8. Gerät (1; 6; 9) mit einer abbildenden Optik (2) und einem Beleuchtungssystem zur Beleuchtung der Oberfläche einer Probe (4), wobei eine Lichtquelle (3; 7; 10) des Beleuchtungssystems um die abbildende Optik (2) herum angeordnet ist, **dadurch gekennzeichnet, dass** das Gerät (1; 6; 9) durch ein Mikroskop oder ein optisches Messgerät gebildet ist und, dass das Beleuchtungssystem durch ein Beleuchtungssystem gemäß einem der Ansprüche 3 bis 6 gebildet ist.
